# EUROPEAN PATENT APPLICATION

(11) **EP 1 107 114 A1**
(43) Date of publication of application: **13.06.2001**
(21) Application number: 00917329.5
(22) Date of filing: 18.04.2000
(51) Int. Cl.: G06F 9/445

(54) **PROGRAM DOWNLOADING DEVICE AND PROGRAM DOWNLOADING METHOD**

(30) Priority: 27.04.1999 JP 11959599
(71) Applicant: Matsushita Electric Industrial Co., Ltd., Kadoma-shi, Osaka 571-8501 (JP)
(72) Inventor: NAGATA, Hideki, Matto-shi, Ishikawa 924-0043 (JP); NOGUCHI, Hiroshi, Yokohama-shi, Kanagawa 244-0817 (JP); TANIGUCHI, Shinichi, Kanazawa-shi, Ishikawa 921-8116 (JP)
(74) Representative: Grünecker, Kinkeldey, Stockmair & Schwanhäusser Anwaltssozietät
(86) International application number: JP0002500
(87) International publication number: WO0065437

(57) **Abstract**

When a program of a DSP 104 and address initial values "AH0" and "AL0" are stored to a ROM 101 and control to transfer the program to a command RAM 108 of the DSP 104 in a state that the stored address initial values are set at the top are executed by a CPU 102 comprising a control signal generating section 103, a ternary counter 105, which repeats a number count operation corresponding to a data length (for example, 3 bytes) of the command RAM 108, performs a count in accordance with a clock signal generated from a control signal generating section 103, while an address counter 106 loads the address initial values of the ROM 101, and then increments the address value for each count-up of the ternary counter 105 and outputs the resultant to the command RAM 108.

## Description

### Technical Field

The present invention relates to a program download apparatus for downloading a program such as a DSP (Digital Signal Processor) program and the like and relates to a program download method.

### Background Art

Conventionally, a program download apparatus and a program download method are described in Unexamined Japanese Patent Application No.2-213968.

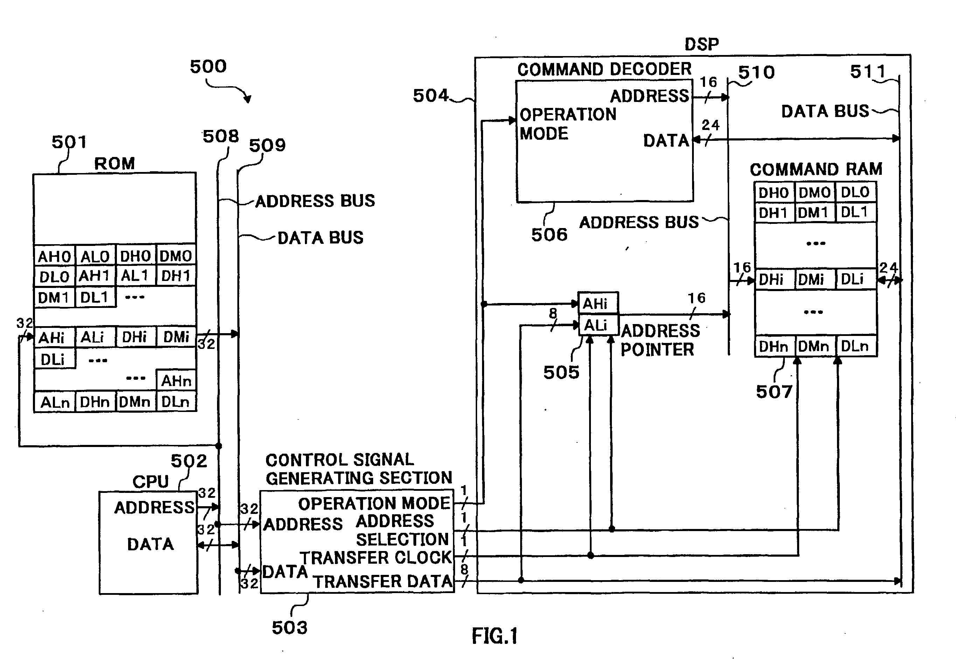

FIG. 1 is a block diagram showing a configuration of a conventional program download apparatus. A program download apparatus 500 shown in FIG. 1 comprises a ROM 501, a CPU 502, a control signal generating section 503, ad a DSP 504. The DSP 504 comprises an address pointer 505, a command decoder 506, and a command RAM 507.

A ROM 501, a CPU 502, and control signal generating section 503 are connected to one another via an address bus 508 and a data bus 509. The address pointer 505, command decoder 506, and command RAM 507 are connected to one another via an internal address bus 510 and an internal data bus 511. Moreover, the control signal generating section 503 is connected to the internal data bus 511.

An execution program of the CPU 502 for downloading a DPS program and a program of DSP 504 are stored to the ROM 501.

A program storage area of the DSP 504 of the ROM 501 is composed of 5 × (n+1) bytes in total wherein a set of bytes consists of 2 bytes of address information high-order byte "AHi" serving as address information "Ai" (I=0, 1, 2, ..., n) corresponding to the address pointer 505 and address information low-order byte "ALi" and 3 bytes of command data high-order byte "DHi", command data middle-order byte "DMi" and command data low-order byte "DLi."

The control signal generating section 503 is placed in a memory space of the CPU 502 and its output signal includes "operation mode", "address selection", "transfer clock", and "transfer data" as control signals with respect to the DSP 504, and their logical statuses can be selected independently of the CPU 502.

The operation of DSP 504 is controlled by the output signal from the control signal generating section 503. In the interior of DSP 504, address information is stored to the address pointer 505 from transfer data sent from the control signal generating section 503. Command data is stored to the command RAM 507 from transfer data. In the command decoder 506, an operation for executing calculation processing is performed by referring to a program content of command RAM 507.

At a program download operating time, the address pointer 505 occupies the internal address bus 510 and transfer data sent from the control signal generating section 503 occupies the internal data bus 511.

When the program download of DSP 504 is completed and the operation of calculation processing is started (hereinafter referred to as "normal operation"), the command decoder 506 occupies the internal address bus 510 and the command RAM 507 occupies the internal data bus 511.

Hereinafter, as one example, an address length of command RAM 507 is set to 16 bits (=2 bytes) and a data length is set to 24 bits (Bd=3 bytes). on the other hand, a transfer data length from the control signal generating section 503 is set to 8 bits (=1 byte) in order to reduce the number of external interference signals of DSP 504.

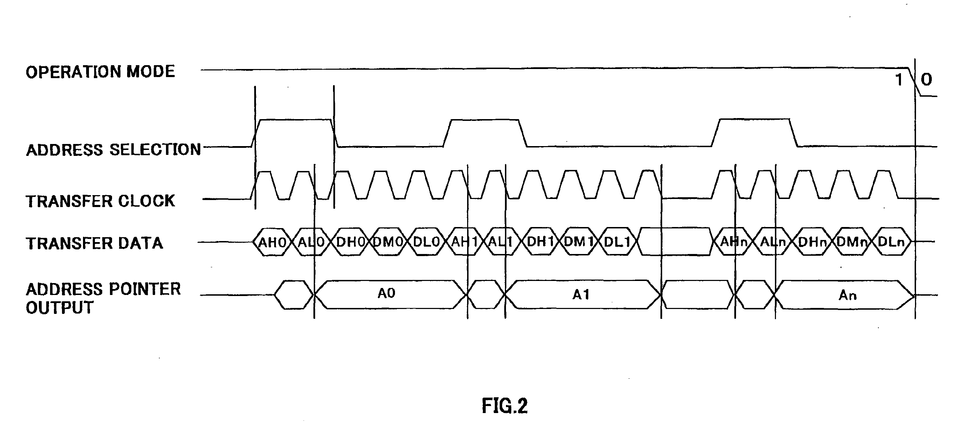

FIG. 2 is a timing view showing an output signal from the control signal generating section 503 and the operation of the address pointer505.

When the signal "operation mode" is "1", an instruction of a program download operation is provided to the DSP 504, and when it is "0", an instruction of normal operation is provided thereto. When the signal "address selection" is "1", it is indicated that transfer data is address information, and when it is "0", it is indicated that transfer data is command data.

Regarding the signal "transfer clock", transfer data is stored to the address pointer 505 or the command RAM 507 at the tailing edge. Whether transfer data is stored to the address pointer 505 or the command RAM 507 depends on the logic status of the signal "address selection."

The programs of DSP 504 stored in a specific area of ROM 501 are sequentially outputted to the signal "transfer data" 8 bits by 8 bits.

First, at the program download operation (signal "operation mode" = "1"), the contents of the signal "transfer data", that is, "AH0" and "AL0" are stored to the address pointer 505 for each tailing edge of the signal "transfer clock" when the signal "address selection" = "1", and "A0" of two bytes obtained by combining "AH0" and "AL0" is outputted to the internal address bus 510.

When the signal "address selection" = "0", the content of the address pointer 505 is held "A0" to indicate the address to the command RAM 507.

Next, the contents of the signal "transfer data", that is, "DH0", "DM0" and "DL0" are sequentially stored to the storage area of address "A0" of the command RAM 507 for each tailing edge of the signal "transfer clock."

Afterward, these operations are similarly repeated n+1 times until the program download of DSP 504 is ordinarily completed. As a result, when the program download of DSP 504 is completed, the DSP 504 is shifted to the normal operation at the time when the signal "operation mode" = "0."

However, the conventional program download apparatus has a configuration in which address information and command data are divisionally transferred on a byte basis, which is the signal "transfer data" length. This causes a problem in which the number of data transfers is largely increased as the capacity of command RAM 507 is increased, with the result that time required for program download is also increased.

For example, it is assumed that the address length of command RAM 507 and data length are set to byte Ba and Bb, respectively and the transfer download is performed until an address pointer 11 becomes "An." In this case, the number of data transfers, that is, the number of transfer clocks becomes (Ba+Bd)×(n+1). In the example of FIG. 1, when Ba=2 and Bd=2 are set and the entire area of command RAM 507 is downloaded, the number of data transfers reaches (2+3) × (65535+1) = 327680 where n=0xffff=65535. It is assumed that one data transfer time is set to 100ns. Time required for the program download is about 32.7ms, and the DSP 504 cannot be moved to the normal operation unless this time passes.

Moreover, address information, which is to be stored in the address pointer 505, must be stored to the ROM 501 regardless of whether the value of the address pointer 505 is generally increased in an arithmetic series like 0, 1, 2, ..., n or decreased like n, n-1, n-2, ... 0. For this reason, the program space to be assigned to the CPU 502 is pressurized and this causes a problem in which the storage area of the ROM 501 is increased correspondingly.

### Disclosure of Invention

It is an object of the present invention is to provide a program download apparatus, which reduces a program storage area of storage means and which suppresses program download time to a data processing apparatus from the program storage area to a minimum, and relates to a program download method.

The above object can be attained by executing the processing set forth below. More specifically, a program for data processing means and an address initial value are stored to a ROM. Control for transferring the program to a RAM of processing means from the ROM is carried out in a state that the stored address initial value is set to a top. In this case, a ternary counter which counts based on the data length of the RAM performs counting in accordance with a clock signal used at a transfer control, while an address counter loads an address initial value of the ROM and then increments the address value for each count-up of the ternary counter, and outputs the incremented value to the RAM.

### Brief Description of Drawings

FIG. 1 is a block diagram showing a configuration of a conventional program download apparatus;
FIG. 2 is a timing view showing an operation of the conventional program download apparatus;
FIG. 3 is a block diagram showing a configuration of a program download apparatus according to a first embodiment of the present invention;
FIG. 4 is a timing view showing an operation of the program download apparatus according to the first embodiment of the present invention;
FIG. 5 is a block diagram showing a configuration of a program download apparatus according to a second embodiment of the present invention; and
FIG. 6 is a timing view showing an operation of the program download apparatus according to the second embodiment of the present invention.

### Best Mode for Carrying Out the Invention

The best mode for carrying out the invention will be specially explained with reference to the accompanying drawings.

### (First embodiment)

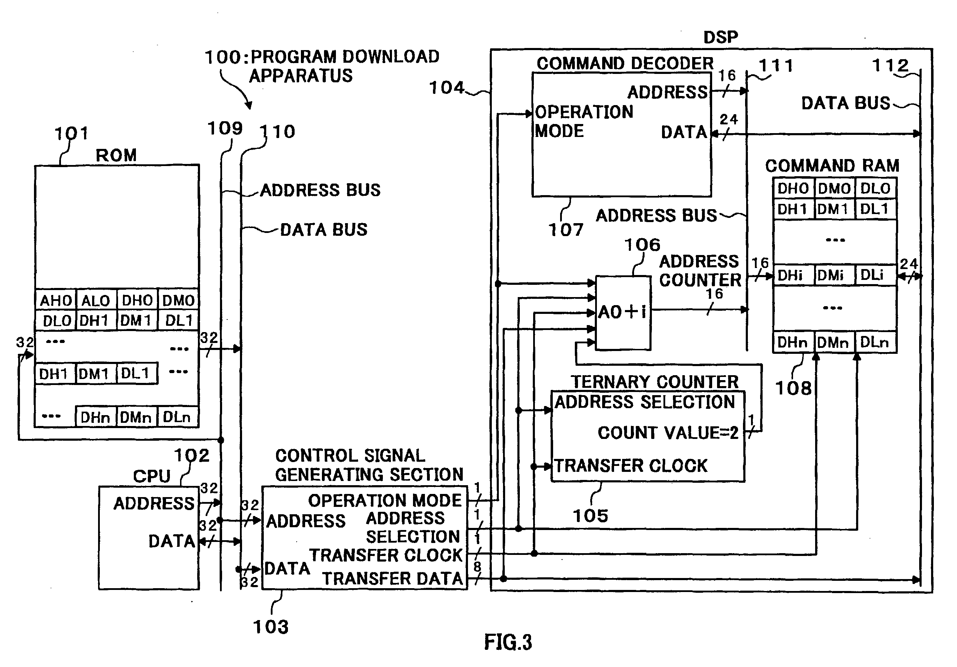

FIG. 3 is a block diagram showing a configuration of a program download apparatus according to a first embodiment of the present invention. A program download apparatus 100 shown in FIG. 3 comprises a ROM 101, a CPU 102, a control signal generating section 103, and a DSP 104. The DSP 104 comprises a ternary counter 105, an address counter 106, a command decoder 107, and a command RAM 108.

The respective ROM 101, CPU 102, and control signal generating section 103 are connected to one another via an address bus 109 and a data bus 110. The respective address counter 106, command decoder 107, and command RAM 108 are connected to one another via an internal address bus 111, and an internal data bus 112. The control signal generating section 103 is connected to an internal data bus 112. The ternary counter 105 is connected between the control signal generating section 103 and the address counter 106.

A program of the CPU 102 and a program of DSP 104 are stored to the ROM 101. A program storage area of the DSP 104 of the ROM 101 is mainly composed of 2 + 3 × (n+1) bytes in total consisting of 2 bytes of address information initial value high-order byte "AH0" serving as an initial value "A0" of the address counter 106 and address information initial value low-order byte "AL0" and 3 bytes of command data high-order byte "DHi", command data middle-order byte "DMi" and command data low-order byte "DLi" (i= 0, 1, 2, ..., n).

The control signal generating section 103 is placed in a memory space of the CPU 102 and its output signal includes "operation mode", "address selection", "transfer clock", and "transfer data" as control signals with respect to the DSP 104, and their logical statuses can be selected independently of the CPU 102. Herein, the signal "transfer data" length is 1 byte.

The operation of the DSP 104 is controlled by the output signal from the control signal generating section 103. In the interior of the DSP 104, the ternary counter 105 is initialized to "0" when transfer data sent from the control signal generating section 103 is address information. When the transfer data is command data, the ternary counter 105 performs a count-up for each transfer clock, and generates a pulse every time when the count value reaches "2."

When transfer data sent from the control signal generating section 103 is address information, the address counter 106 loads the address information "A0" and increments the initial value "A0" for each output pulse of the ternary counter 105. The command RAM 108 stores command data from transfer data. The command decoder 107 executes calculation processing by referring the program content of the command RAM 108.

At a program download operating time, the address counter 106 occupies the internal address bus 111 and transfer data from the control signal generating section 103 occupies the internal data bus 112.

When the DSP 104 completes the program download and enters the normal operation, the command decoder 107 occupies the internal address bus 111 and the command RAM 108 occupies the internal data bus 112.

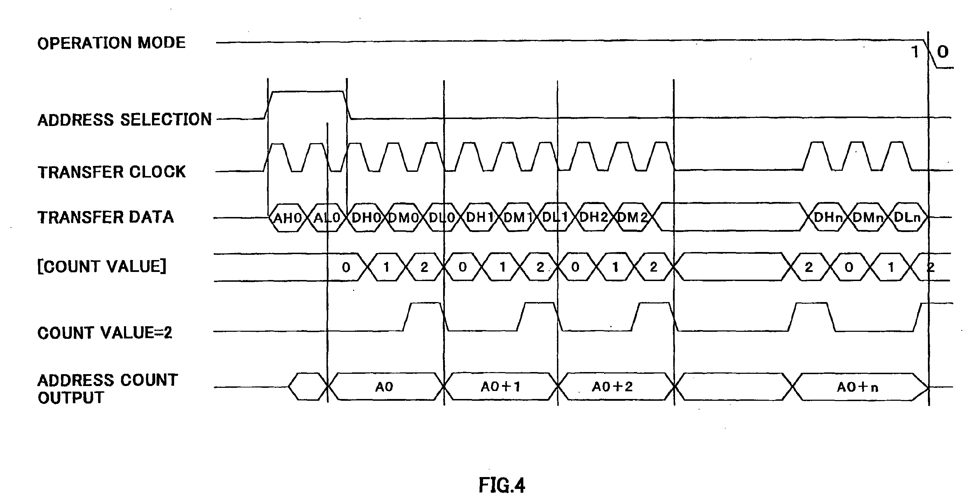

FIG. 4 is a timing view showing an operation of the program download apparatus according to the first embodiment of the present invention. In FIG. 4, when the signal "operation mode" is "1", an instruction of a program download operation is provided to the DSP 104, and when it is "0", an instruction of the normal operation is provided thereto. When the signal "address selection" is "1", it is indicated that the content of "transfer data" is address information, and when it is "0", it is indicated that transfer data is command data.

Regarding the signal "transfer clock", the signal "transfer data" is stored to the address counter 106 or the command RAM 108 at the tailing edge. Whether the signal "transfer data" is stored to the address counter 106 or the command RAM 108 depends on the logic status of the signal "address selection."

The programs of DSP 104 stored in a specific area of ROM 101 are sequentially outputted to the signal "transfer data" 1 byte by 1 byte. The signal "count value" is a count value of the ternary counter 105. The signal "count value = 2" is an output signal of the ternary counter 105, and when the count value reaches 2, "1" is outputted. The signal "address counter output" is a value of the address counter 106, and indicates an address to the command RAM 108.

At the program download operation when the signal "operation mode" = "1" at first, the contents of the signal "transfer data", that is, "AH0" and "AL0" are loaded onto the address counter 106 for each tailing edge of the signal "transfer clock" when the signal "address selection" = "1", and the address initial value "A0" of two bytes obtained by combining "AH0" and "AL0" is outputted to the internal address bus 111.

Next, when the signal "address selection" = "0", the contents of the signal "transfer data", that is, "DH0", "DM0", "DL0" are sequentially stored to the storage area of the address "A0" of the command RAM 108 for each trailing edge of the signal "transfer clock."

The ternary counter 105 repeatedly counts 0, 1, 2 for each the trailing edge of the signal "transfer clock", and generates the pulse of the signal "count value = 2 = "1" when the value matches "2."

When the signal "count value = 2" = "1", the address counter 106 updates the initial value "A0" to an incremented value "A0+1" at the tailing edge of the signal "transfer clock" to advance the address to the command RAM 108 by one.

Afterward, similarly, every time when 3 byte-command data is transferred and stored to the command RAM 108, the address counter 106 advances by one. Then, the DSP programs are sequentially downloaded without any contradictions until the address counter 106 reaches "A0+n." When the download is completed, the signal "operation mode" is set to "0", so that the DSP 104 goes to the normal operation.

Thus, according to the program download apparatus 100 of the first embodiment, the number of data transfers, which is required for downloading the DSP program, that is, the number of transfer clocks becomes Ba + Bd × (n+1) when the address length Ba of the command RAM 108 = 2 bytes and the data length Bd = 3 bytes.

Therefore, since n = 65535 to download the entire area of the command RAM 108, the number of data transfers becomes 2 + 3×(65535+1) = 196610, making it possible to largely suppress the number of data transfers as compared with the conventional case of 327680. In this case, when one data transfer time is set to 100ns, time required for completing the program may be about 19.7ms, making it possible to largely reduce the time as compared with the conventional case of about 32.7ms.

Moreover, regarding the program area of DSP 104 occupying the ROM 101, the amount of address information is largely reduced, allowing the capacity to be suppressed to one in which 2 bytes are added to the capacity of RAM 108.

Still moreover, when the address length Ba of command RAM 108 = 2 bytes and the data length Bd = 5 bytes, a quinary counter is used in place of the ternary counter 105. When the data length Bd = 10 bytes, a denary counter is used in place of the ternary counter 105. When the data length Bd = p bytes, a p counter is used in place of the ternary counter 105. The use of the above-mentioned counters makes it possible to obtain the same technical advantage as mentioned above. In addition, the DSP 104 can apply the aforementioned configuration if it is an apparatus, which performs data processing in accordance with the program.

### (Second embodiment)

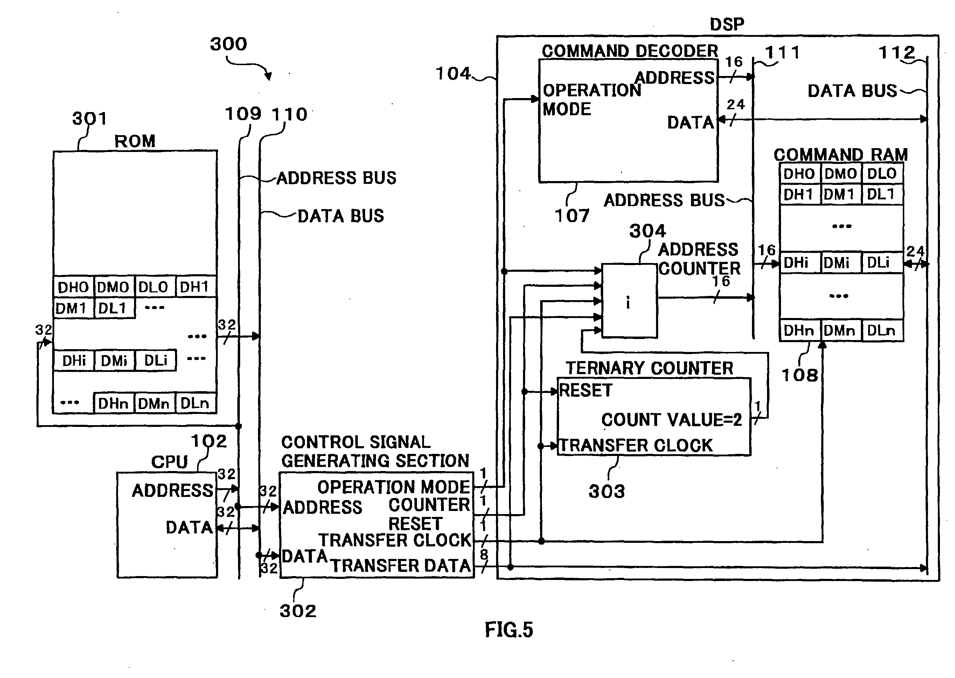

FIG. 5 is a block diagram showing a configuration of a program download apparatus according to a second embodiment of the present invention. The difference between a program download apparatus 300 of the second embodiment shown in FIG. 5 and the program download apparatus 100 of the first embodiment lies in a ROM 301, a control signal generating section 302, a ternary counter 303, and an address counter 304. In connection with the same configurations of FIG. 5 as those of the first embodiment (FIG. 3), the same reference numerals as those of FIG. 3 are added thereto, and the specific explanation is omitted.

A program storage area of the DSP 104 of the ROM 301 is mainly composed of 3 × (n+1) bytes in total consisting of command data high-order byte "DHi", command data middle byte "DMi" and command data low-order byte "DLi" (I = 0, 2, 3, ..., n).

The control signal generating section 302 is placed in a memory space of the CPU 102 and its output signal includes "operation mode", "counter reset", "transfer clock", and "transfer data" as control signals with respect to the DSP 104, and their logical statuses can be selected independently of the CPU 102. Herein, the signal "transfer data" length is 1 byte.

The ternary counter 303 is initialized when the signal "counter reset" = "0." When the signal "counter reset" is = "1", the ternary counter 303 performs a count-up for each transfer clock, and generates a pulse every time when the value at this time reaches "2."

The address counter 304 is initialized when the signal "counter reset" = "0." The address counter 304 increments the address from "0" for each output pulse of the ternary counter 303 in sequence.

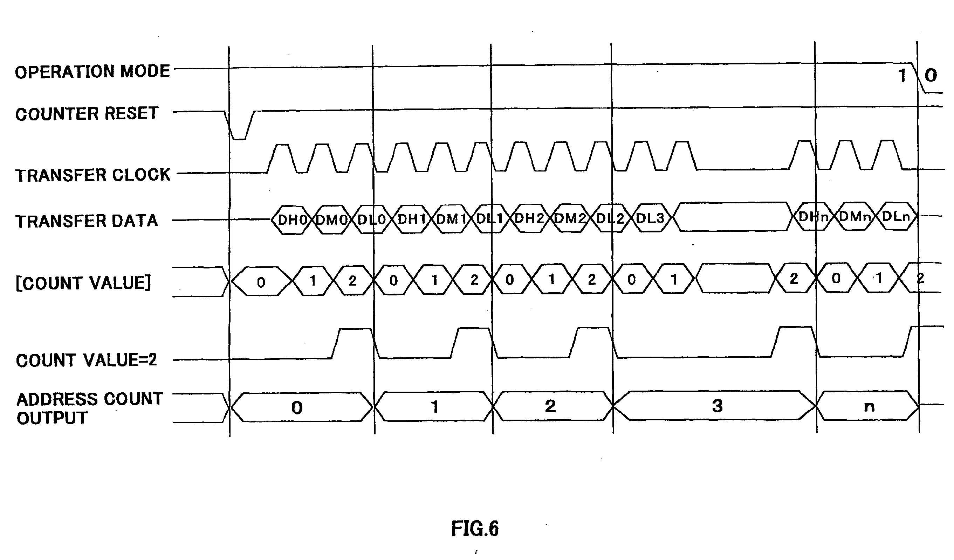

FIG. 6 is a timing view showing an operation of the program download apparatus according to the second embodiment of the present invention. In FIG. 6, when the signal "operation mode" is "1", an instruction of a program download operation is provided to the DSP 104, and when it is "0", an instruction of normal operation is provided thereto.

The signal "count reset" is a reset signal of a negative logic with respect to the address counter 304 and ternary counter 303. The signal "transfer clock" stores the signal "transfer data" to the command RAM 108 at the trailing edge. The CPU 102 sequentially outputs the programs of DSP 104 stored in the specific area of ROM 301 one byte by one.

The signal "count value" is a count value of the ternary counter 303. The signal "count value = 2" is an output signal of the ternary counter 302. When the count value is 2, "1" is outputted.

The signal "address counter output" is a value of the address counter 304 and indicates an address to the command RAM 108.

Regarding the program download operation when the signal "operation mode" = "1", the signal "counter reset" = "0" is established at first, so that the address counter 304 is initialized to "0", and this value is outputted to the internal address bus 111. At this time, the ternary counter 303 is initialized to the counter value = "0."

Next, when the signal "counter reset" = "1", the contents of the signal "transfer data", that is, "DH0", "DM0" and "DL0" are sequentially stored to the storage area of address "A0" of the command RAM 108 for each tailing edge of the signal "transfer clock."

The ternary counter 303 repeatedly counts 0, 1, 2 for each the trailing edge of the signal "transfer clock", and generates the pulse of the signal "count value = 2 = "1" when the value matches "2."

When the signal "count value = 2" = "1", the address counter 304 updates the initial value "A0" to an incremented value "1" at the tailing edge of the signal "transfer clock" to advance the address to the command RAM 108 by one.

Afterward, similarly, every time when 3 byte-command data is transferred and stored to the command RAM 108, the address counter 304 advances by one. Then, the DSP programs are sequentially downloaded without any contradictions until the address counter 304 reaches "n." When the download is completed, the signal "operation mode" is set to "0", so that the DSP 104 goes to the normal operation.

Thus, according to the program download apparatus 300 of the second embodiment, the number of data transfers, which is required for downloading the DSP program, that is, the number of transfer clocks becomes Bd × (n+1) when the data length Bd of the command RAM 108 (= 3 bytes).

Therefore, since n = 65535 in order to download the entire area of the command RAM 108, the number of data transfers can be suppressed to 3×(65535+1) = 196608. In this case, when one data transfer time is set to 100ns, time required for completing the program may be about 19.7ms.

Moreover, the program area of DSP 304 occupying the ROM 301 is only for command data, making it possible to match the capacity of the command RAM 108, and to attain the capacity smaller than the case of the first embodiment.
① The program download apparatus according to the first aspect of the present invention adopts a configuration comprising first rewritable storage means for storing a program, processing means for performing data processing in accordance with the stored program, second storage means for storing the program of the processing means and an address initial value, control means for performing control to transfer the program to the first storage means from the second storage means in a state that the address initial value is set to a top, a Bd counter for performing a count at a transfer control time by the control means and performing a count-up when a count value reaches a value corresponding to a data length Bd of the first storage means, and an address counter for advancing the address value for each count-up of the Bd counter to output the advanced address value to the first storage means after loading the address initial value at the transfer control time by the control means.
   According to this configuration, at the time of downloading the program of processing means, the transfer of address information can be suppressed to a minimum to reduce time required for downloading and to shift processing means to a next operation state speedily, and the program area of processing means pre-stored in the second storage means can be substantially equalized to that of the first storage means of processing means.
② The program download apparatus according to the second aspect of the present invention adopts a configuration comprising first rewritable storage means for storing a program, processing means for performing data processing in accordance with the stored program, second storage means for storing the program of the processing means, control means for performing control to transfer the program to the first storage means from the second storage means, a Bd counter, which is initialized at the first of the transfer control by the control means, for performing a count at the transfer control time by the control means and performing a count-up when a count value reaches a value corresponding to a data length Bd of the first storage means, and an address counter, which is initialized at the first of the transfer control by the control means, for advancing an address value for each count-up of the Bd counter and to output the advanced address value to the first storage means.
   According to this configuration, at the time of downloading the program of processing means, the transfer of address information can be suppressed to a minimum to reduce time required for downloading and to shift processing means to a next operation state speedily, and the program area of processing means stored in the second storage means can be substantially equalized to that of the first storage means of processing means.
③ The program download apparatus according to the third aspect of the present invention adopts a configuration in the first or second aspect wherein the Bd counter and the address counter are provided in the processing means.
   According to this configuration, processing means having the functions of the Bd counter and the address counter can be formed to a single-chip.
④ The program download apparatus according to the fourth aspect of the present invention adopts a configuration in any one of first to third aspects wherein the processing means is a digital signal processing apparatus.
   According to this configuration, it is possible to transfer the program to the digital signal processing apparatus in the same way as any one of the first to third aspects.
⑤ The communication terminal apparatus according to the fifth aspect of the present invention adopts a configuration comprising the program download apparatus described in any one of first to fourth aspects.
   According to this configuration, since the reduction in time required for downloading makes it possible to perform various kinds of processing speedily, the processing rate of the entirety of the apparatus can be improved.
⑥ The program download method according to the sixth aspect of the present invention comprising the steps of storing an address initial value to storage means when a program stored in the storage means is transferred to rewritable storage means in processing means, which performs data processing in accordance with the program, causing a Bd counter, which performs a count-up when a count value reaches a value corresponding to a data length Bd of the rewritable storage means, to carry out a counting operation at the transfer time, and advancing an address value for each count-up of the Bd counter after an address counter, which outputs the address value to the rewritable storage means, loads the address initial value at the transfer time.
   According to this method, at the time of downloading the program of processing means, the transfer of address information can be suppressed to a minimum to reduce time required for downloading and to shift processing means to a next operation state speedily, and the program area of processing means pre-stored in the second storage means can be substantially equalized to that of the rewritable storage means of processing means.
⑦ The program download method according to the seventh aspect of the present invention comprising the steps of causing a Bd counter, which performs a count-up when a count value reaches a value corresponding to a data length Bd of rewritable storage means in transferring a program stored in storage means to the rewritable storage means in processing means, which performs data processing in accordance with the program, to carry out a counting operation after resetting at the first of the transfer and advancing an address value for each count-up of the Bd counter after an address counter, which outputs the address value to the rewritable storage means, is reset at the first of the transfer time.

According to this method, at the time of downloading the program of processing means, the transfer of address information can be suppressed to a minimum to reduce time required for downloading and to shift processing means to a next operation state speedily, and the program area of processing means pre-stored in the second storage means can be substantially equalized to that of the rewritable storage means of processing means.

The program download apparatus explained in the above embodiments can be mounted on various apparatuses installing the DSP, which needs the transfer to the command RAM. Though the communication terminal apparatuses (cellular phone, moving image communication terminal, portable information terminal and the like) can be named as apparatuses installing the DSP, any apparatus may be used if they install the DSP, which needs the transfer to the command RAM. In the apparatus installing the program download apparatus, since the reduction in time required for downloading makes it possible to perform various kinds of processing speedily, the processing rate of the entirety of the apparatus can be improved.

As explained above, according to the present invention, there can be provided a program download apparatus, which reduces a program storage area of storage means and which suppresses program download time to a data processing apparatus from the program storage area to a minimum, and relates to a program download method.

This application is based on the Japanese Patent Application No. HEI 11-119595 filed on April 27, 1999, entire content of which is expressly incorporated by reference herein.

### Industrial Applicability

This invention is suitable for use in the field of the program download apparatus for downloading a program such as a DSP program and the like.

## Claims

1. A program download apparatus comprising:
first rewritable storage means for storing a program;
processing means for performing data processing in accordance with the stored program;
second storage means for storing the program of the processing means and an address initial value;
control means for performing control to transfer the program to the first storage means from the second storage means in a state that the address initial value is set to a top;
a Bd counter for performing a count at a transfer control time by the control means and performing a count-up when a count value reaches a value corresponding to a data length Bd of the first storage means; and
an address counter for advancing the address value for each count-up of the Bd counter to output the advanced address value to the first storage means after loading the address initial value at the transfer control time by the control means.

2. A program download apparatus comprising:
first rewritable storage means for storing a program;
processing means for performing data processing in accordance with the stored program;
second storage means for storing the program of the processing means;
control means for performing control to transfer the program to the first storage means from the second storage means;
a Bd counter, which is initialized at the first of the transfer control by the control means, for performing a count at the transfer control time by the control means and performing a count-up when a count value reaches a value corresponding to a data length Bd of the first storage means; and
an address counter, which is initialized at the first of the transfer control by the control means, for advancing an address value for each count-up of the Bd counter and to output the advanced address value to the first storage means.

3. The program download apparatus according to claim 1 or 2, wherein the Bd counter and the address counter are provided in the processing means.

4. The program download apparatus according to any one of claims 1 to 3, wherein the processing means is a digital signal processing apparatus.

5. A communication terminal apparatus comprising the program download apparatus described in any one of claims 1 to 4.

6. A program download method comprising the steps of :
storing an address initial value to storage means when a program stored in the storage means is transferred to rewritable storage means in processing means, which performs data processing in accordance with the program;
causing a Bd counter, which performs a count-up when a count value reaches a value corresponding to a data length Bd of the rewritable storage means, to carry out a counting operation at the transfer time; and
advancing an address value for each count-up of the Bd counter after an address counter, which outputs the address value to the rewritable storage means, loads the address initial value at the transfer time.

7. A program download method comprising the steps of:
causing a Bd counter, which performs a count-up when a count value reaches a value corresponding to a data length Bd of rewritable storage means in transferring a program stored in storage means to the rewritable storage means in processing means, which performs data processing in accordance with the program, to carry out a counting operation after resetting at the first of the transfer; and
advancing an address value for each count-up of the Bd counter after an address counter, which outputs the address value to the rewritable storage means, is reset at the first of the transfer time.
